# EUROPÄISCHE PATENTSCHRIFT

(11) **EP 0 476 253 B1**
(45) Veröffentlichungstag und Bekanntmachung des Hinweises auf die Patenterteilung: **20.09.1995**
(21) Anmeldenummer: 91111322.3
(22) Anmeldetag: 08.07.1991
(51) Int. Cl.: B60N 2/24

(54) **Verstellbarer Fahrzeugsitz**
Adjustable vehicle seat
Siège réglable de véhicule

(30) Priorität: 12.09.1990 CH 2958/90
(43) Veröffentlichungstag der Anmeldung: 25.03.1992
(73) Patentinhaber: INVENTIO AG, CH-6052 Hergiswil NW (CH)
(72) Erfinder: Bayer, Georg, W-8995 Sigmarszell (DE); Bruderer, Peter, CH-9008 St. Gallen (CH)

(56) Entgegenhaltungen:
- EP-A- 0 229 625
- DE-A- 2 740 697
- DE-A- 3 521 836
- DE-A- 3 807 736
- FR-A- 2 386 430
- FR-A- 2 424 167

## Beschreibung

Die Erfindung betrifft einen verstellbaren Fahrzeugsitz für öffentliche Verkehrsmittel, insbesondere für Schienenfahrzeuge, bestehend aus einem bodenfesten, einen Verstellmechanismus tragenden Sitzgerippe und einer Sitzschale mit Sitz- und Rückenpolster, wobei die Neigung der Sitzschale mittels dem Verstellmechanismus individuell anpassbar ist.

Aus der Offenlegungsschrift DE-A1-38 07 736 ist ein Fahrzeugsitz für Eisenbahnabteile bekannt, der aus einem bodenfesten Sitzuntergestell und aus einer starren, aus einem zweiteiligen Sitzteil und einem Rückenteil gebildeten Sitzschale besteht, wobei das zweiteilige Sitzteil ein Schenkelteil und ein Gesässteil aufweist. Zur wandbündigen Abwärtsbewegung der Kante des Rückenteils und zur höhengleichen Verstellung des Schenkelteils ist das Schenkelteil mit dem Gesässteil mittels einer gemeinsamen Schwenkachse gelenkig verbunden und in einem am Sitzuntergestell angeordneten bodenparallelen Langloch geführt. Ein als Lenker ausgebildetes freies Ende des Schenkelteils wird entlang einer am Sitzuntergestell angeordneten bodenparallelen Rollenbahn geführt. Das Gesässteil wird im Bereich des Überganges zum Rückenteil in einem nach vorn geradlinig abfallenden, am Sitzuntergestell angeordneten Langloch geführt. Eine als Kraftspeicher wirkende Gasfeder dient zur Unterstützung des Reisenden beim Verschwenken des Sitzes aus seiner einen Stellung in die andere, wobei die Unterstützung in Richtung der Aufrichtung des Sitzes in die Sitzlage derart erfolgt, dass der Sitz bereits bei geringem Aufrichten des Oberkörpers des Reisenden selbsttätig in seine aufrechte Stellung bewegt wird.

Ein Nachteil der bekannten Einrichtung liegt darin, dass beim Abschwenken des Sitzes die vom Schenkelteil und Gesässteil gebildete Sitzfläche je nach Neigung des Rückenteils geknickt wird, was der Anatomie der Gesäss- und Oberschenkelpartie des Reisenden entgegenläuft. Ein weiterer Nachteil der bekannten Einrichtung liegt darin, dass zur Erzielung der einfachen Abschwenkbewegung eine mechanisch aufwendige Konstruktion notwendig ist. Ein aus einer Vielzahl von mechanischen Teilen aufgebauter Verstellmechanismus ist besonders bei in Masse hergestellten Fahrzeugsitzen von grosser wirtschaftlicher Tragweite, indem jedes Einzelteil gesamthaft gesehen die Konkurrenzfähigkeit negativ beeinflusst.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und ein aus einfachsten Mitteln aufgebauter Fahrzeugsitz vorzuschlagen, der eine ergonomisch richtige Ruhestellung des Reisenden gewährleistet.

Die durch die Erfindung erreichten Vorteile sind im wesentlichen darin zu sehen, dass das Bedürfnis der Reisenden, das Reiseziel insbesondere bei länger andauernden Fahrten ausgeruht zu erreichen, befriedigt wird. Ausserdem bietet der erfindungsgemässe Fahrzeugsitz kleingewachsenen Reisenden uneingeschränkten Sitzkonfort, indem beim Abschwenken des Sitzes die Höhe der Vorderkante des Sitzpolsters konstant gehalten wird. Ein weiterer Vorteil der Erfindung ist darin zu sehen, dass mit kleinem mechanischen Aufwand an Teilen und Sitzpolster sowie mit einer einfachen Montage die Stückkosten gering gehalten werden können, was wiederum die Durchsetzung des Fahrzeugsitzes am Markt erleichtert.

Im folgenden wird die Erfindung anhand von lediglich einen Ausführungsweg darstellenden Zeichnungen näher erläutert.

Es zeigen:
- Fig. 1: einen verstellbaren Fahrzeugsitz im Aufriss,
- Fig. 2: den verstellbaren Fahrzeugsitz im Seitenriss,
- Fig. 3: den verstellbaren Fahrzeugsitz ohne Sitzschale und Polster im Aufriss,
- Fig. 4: einen Schnitt entlang der Linie B-B in der Fig. 3 durch den verstellbaren Fahrzeugsitz ohne Sitzschale und Polster,
- Fig. 5: einen erfindungsgemässen Verstellmechanismus im Aufriss,
- Fig. 6: den erfindungsgemässen Verstellmechanismus in der Normalstellung im Seitenriss,
- Fig. 7: den erfindungsgemässen Verstellmechanismus in der Ruhestellung im Seitenriss,
- Fig. 8: einen Schnitt entlang der Linie A-A der Fig. 1 durch den Sitzbereich einer Sitzschale,
- Fig. 9: Einzelheiten einer Rollenführung des Verstellmechanismus,
- Fig. 10: einen Schnitt entlang der Linie C-C der Fig. 9 durch das obere Ende der Rollenführung,
- Fig. 11: Einzelheiten einer Gleitstückführung des Verstellmechanismus und
- Fig. 12: einen Schnitt entlang der Linie D-D der Fig. 11 durch das freie Ende der Gleitstückführung.

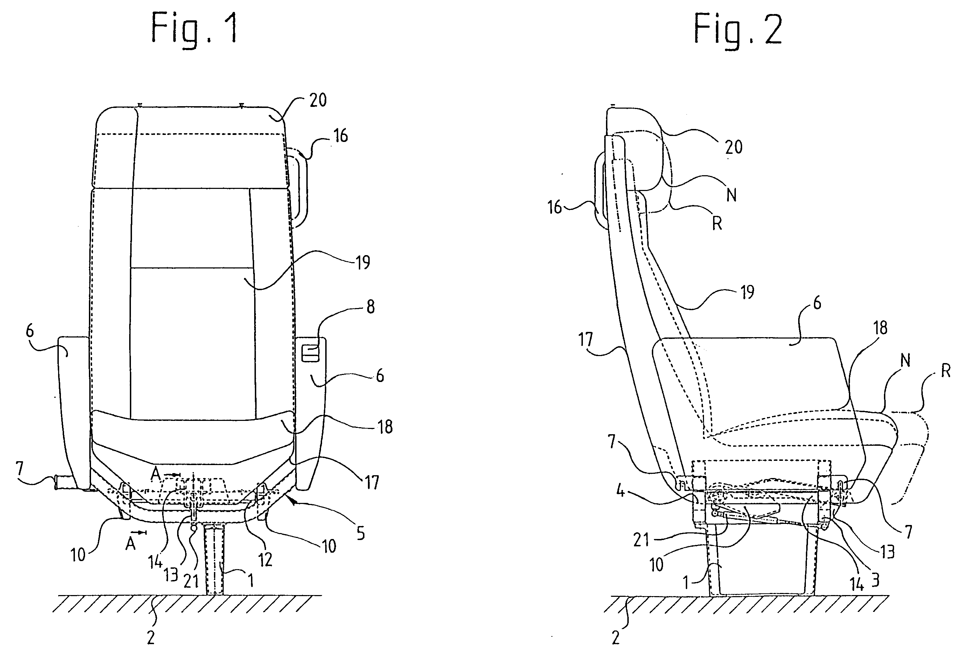

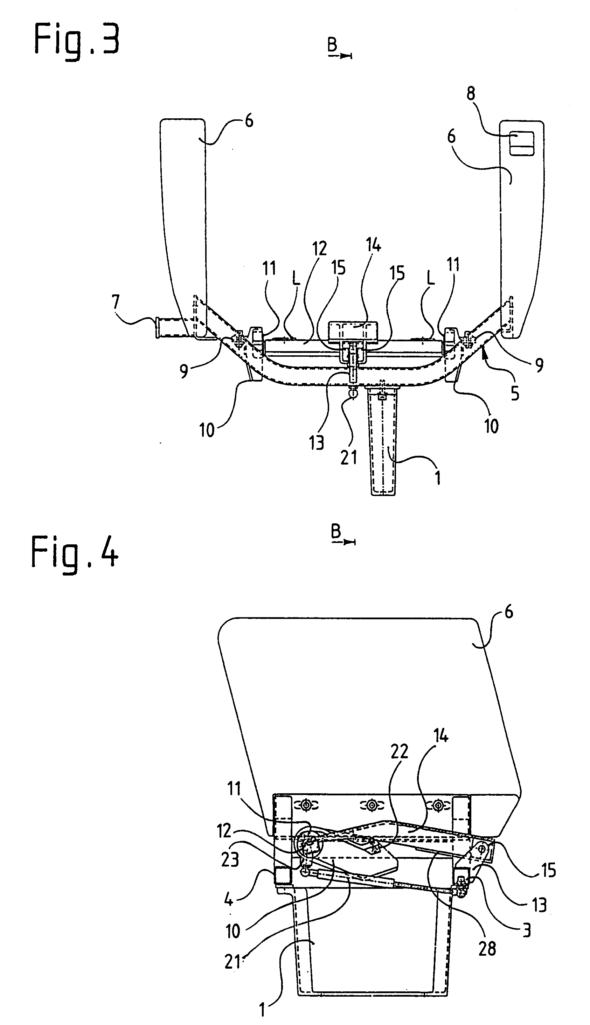

In den Fig. 1 bis 12 ist mit 1 ein Sitzfuss bezeichnet, der fest mit einem Fahrzeugboden 2 verbunden ist. Der Sitzfuss 1 trägt ein aus einem vorderen Träger 3, einem hinteren Träger 4 und aus je Seite einem die Träger 3 ; 4 verbindenden Seitenträger bestehendes Sitzgerippe 5. Sitzgruppen werden aus Doppel-Sitzgerippen gebildet. Auf der einen Sitzseite weist das Sitzgerippe 5 eine Armlehne 6 und einen zur Wandbefestigung dienender Fortsatz 7 auf. Auf der anderen Seite ist eine Armlehne 6 mit einem Aschenbecher 8 vorgesehen. Je Sitzseite ist im hinteren Sitzbereich eine mittels Flanschen 9 mit dem Seitenträger verbundene Rollenführung 10 angeordnet, in der eine Rolle 11 geführt wird, die mit der gegenüberliegenden Rolle 11 mittels einer Achse 12 verbunden ist. Achsmittig greift eine am vorderen Ende von einem Führungsarm 13 gestützte Gleitstückführung 14 an, die entlang von am Führungsarm 13 gelenkig gelagerten Gleitstücken 15 gleitet.

Eine mit einem Haltegriff 16 versehene einstückige Sitzschale 17 ist an ihrer Unterseite mit der Gleitstückführung 14 und an den Auflagepunkten L mit der Achse 12 fest verbunden. Die Sitzschale 17 trägt ein Sitzpolster 18, ein Rückenpolster 19 und ein Kopfpolster 20. Ausgezogene Linien zeigen Sitzschale 17 und Polster 18 ; 19 ; 20 in der Normalstellung N, strichpunktierte Linien stellen die Ruhestellung R des Sitzes dar. Als Dämpfungs- und Rückstellelement dient eine Gasfeder 21 mit einer flachen Kennlinie. Der Sitz kann durch Verlagerung des Körpergewichts des Reisenden in die Ruhestellung R gebracht und dort gehalten werden. Bei Entlastung geht die Sitzschale 17 selbsttätig, gedämpft in die Normalstellung N zurück.

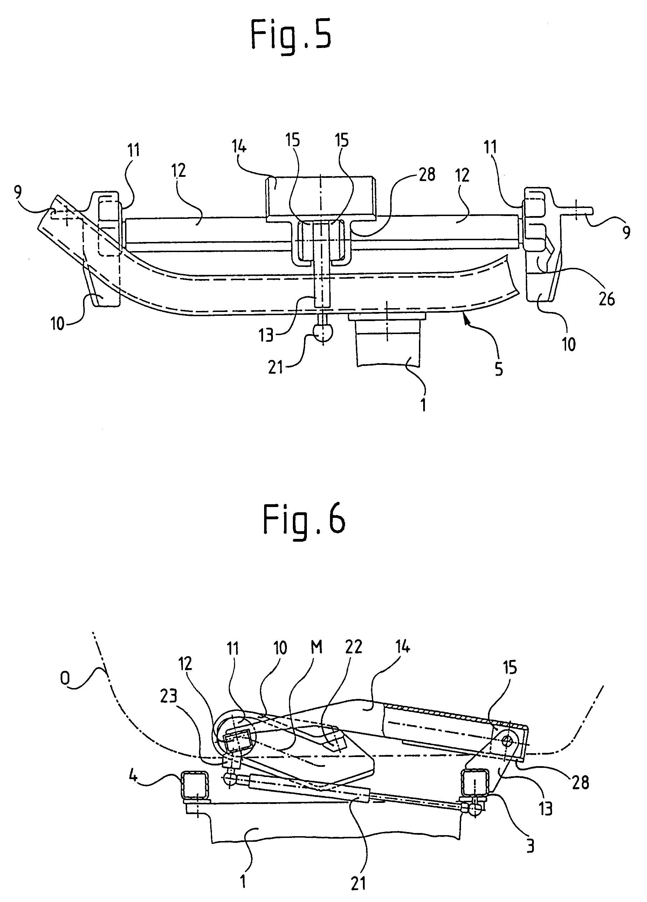

In den Fig. 5 bis 7 ist der im wesentlichen aus zwei Rollenführungen 10, einer nach unten geknickten Gleitstückführung 14 und einer als Kraftspeicher wirkenden Gasfeder 21 bestehende Verstellmechanismus näher erläutert. Der Verstellmechanismus ist so ausgelegt, dass beim Übergang von der Normalstellung N in die Ruhestellung R Sitzschale 17 und Polster 18 ; 19 ; 20 nach unten und nach vorne bewegt werden, ohne dass dabei Stauraum zwischen zwei hintereinander angeordneten Sitzen verloren geht. Die linksseitige und die rechtsseitige Rollenführung 10 bilden zusammen mit der mittig angeordneten Gleitstückführung 14 für die Sitzschale 17 eine verstellbare Dreipunkt-Auflage. Die beiden Rollenführungen 10 bewirken eine Absenkung der Sitzschale 17 im hinteren Sitzbereich und gleichzeitig eine Verstellung der Sitzschale 17 nach vorne. Die für die Sitzschale 17 als dritter Auflagepunkt wirkende Gleitstückführung 14 ist so ausgebildet und wird derart geführt, dass bei deren Verstellung die Höhe der Vorderkante des Sitzpolsters 18 beibehalten wird. Dazu sind am freien Ende des an dem mittig am vorderen Träger 3 angeordneten nach vorne geneigten Führungsarms 13 je Seite ein Gleitstück 15 mit besonderen Gleiteigenschaften gelenkig gelagert. Bei der Verstellung der Sitzschale 17 verschiebt sich das freie Ende der Gleitstückführung 14 relativ zu den Gleitstücken 15 nach vorne. Das mittig an der Achse 12 angeordnete hintere Ende der Gleitstückführung 14 verschiebt sich auf einer durch die Rolle 11 vorherbestimmten Rollbahn M. Zur Begrenzung des Verschiebeweges ist an der Rollenführung 10 ein mechanischer Anschlag 22 vorgesehen. In der Mitte der Achse 12 ist ein Achsstück 23 angeordnet, an dem das eine Ende der Gasfeder 21 angreift. Das andere Ende der Gasfeder 21 greift am vorderen Träger 3 in der Mitte an. Mit O ist die Position der Sitzschale 17 in der Normalstellung N und mit P die Position der Sitzschale 17 in der Ruhestellung R bezeichnet. Bei der Verstellung von Position O nach Position P wirkt die auf die Sitzschale 17 einwirkende Kraft der Gasfederkraft entgegen, wobei die zur Rückstellung des Sitzes notwendige Energie in der Gasfeder 21 gespeichert wird.

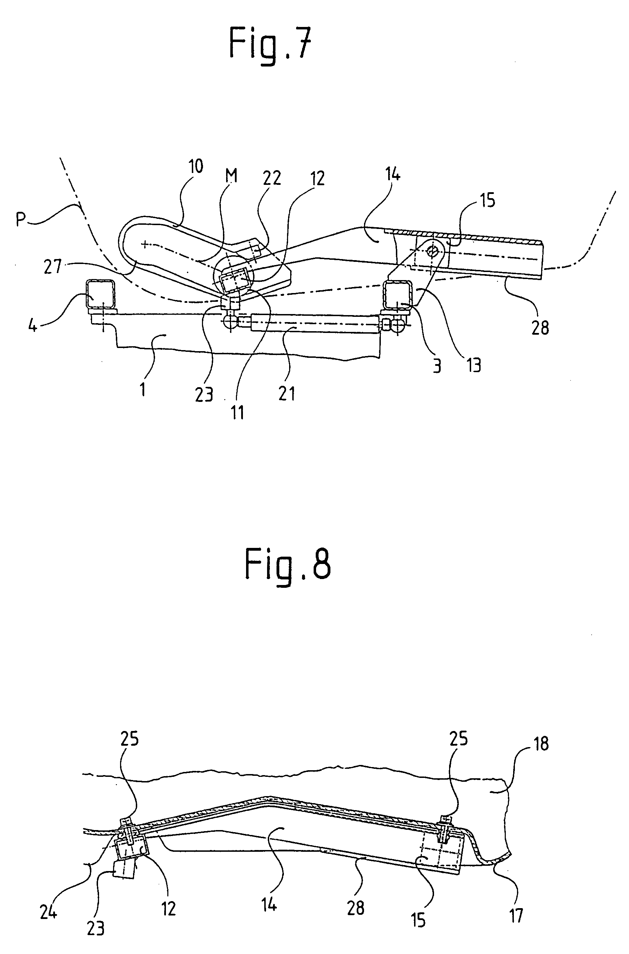

Der in der Fig. 1 gelegte Schnitt entlang der Linie A-A zeigt in der Fig. 8 Einzelheiten über die Befestigung der Sitzschale 17 an der Gleitstückführung 14 und an der die Rollen 11 verbindende Achse 12. Die als Unterkante 24 dargestellte Unterfläche der Sitzschale 17 ist dreidimensional an die längs verlaufende Gleitstückführung 14 und an die quer verlaufende Achse 12 angeformt und mit diesen mittels Schrauben 25 verbunden.

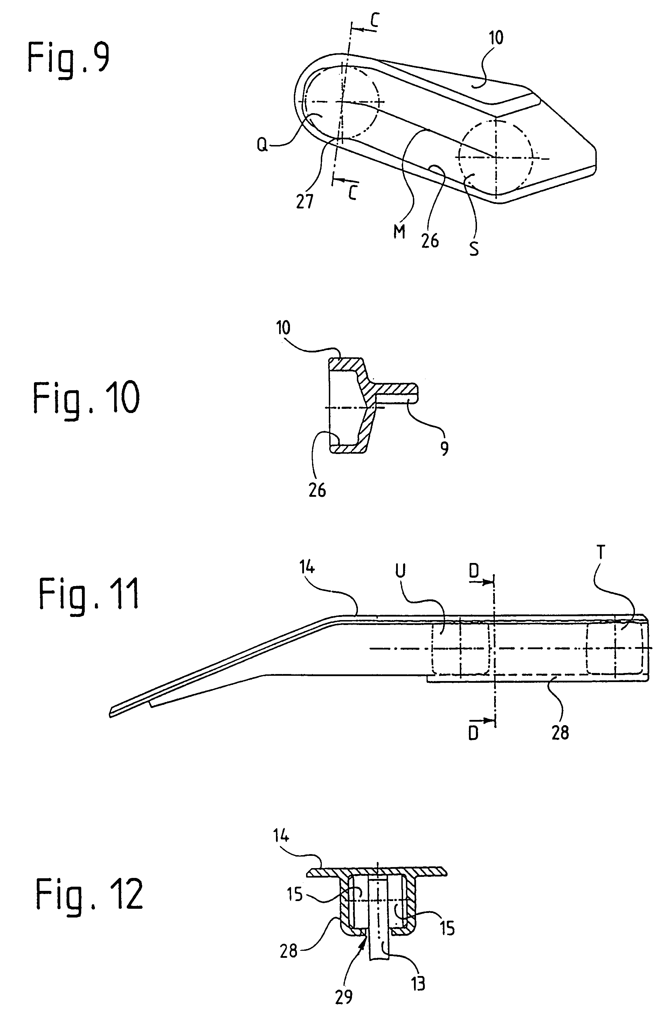

In Fig. 9 und 10 sind Einzelheiten der Rollenführung 10 dargestellt. Die Rollenführung 10 ist an ihrem oberen Ende konisch verjüngt und weist an einer Rollfläche 26 einen Rücksprung 27 auf, sodass die Rolle 11 in ihrer der Normalstellung N der Sitzschale 17 entsprechenden Ausgangsposition Q spielfrei gelagert und gegen unbeabsichtigtes Vorwärtsrollen gesichert ist. In der Endposition S wird die Rolle 11 durch die nach vorne ansteigende Rollfläche 26 zusammen mit dem Anschlag 22 gegen unbeabsichtigtes Vorwärtsrollen und durch die nach rückwärts ansteigende Rollfläche 26 gegen unbeabsichtigtes Rückwärtsrollen gesichert.

Der in Fig. 12 dargestellte Schnitt entlang der Linie D-D in der Fig. 11 zeigt das als Hohlprofil 28 ausgebildete freie Ende der nach unten geknickten Gleitstückführung 14 zur Aufnahme der Gleitstücke 15. An der Unterseite des Hohlprofils 28 ist in Längsrichtung ein Langloch 29 vorgesehen, durch das das Ende des Führungsarms 13 tritt. Mit T ist die Ausgangsposition und mit U die Endposition der Gleitstückführung 14 bezeichnet.

## Patentansprüche

1. Verstellbarer Fahrzeugsitz für öffentliche Verkehrsmittel, insbesondere für Schienenfahrzeuge, bestehend aus einem bodenfesten, einen Verstellmechanismus tragenden Sitzgerippe und einer Sitzschale mit Sitz- und Rückenpolster, wobei die Neigung der Sitzschale mittels dem Verstellmechanismus individuell anpassbar ist,
dadurch gekennzeichnet,
dass der Verstellmechanismus zwei im hinteren Sitzbereich angeordnete, nach vorn abfallende Rollenführungen (10) mit zwei mittels einer Achse (12) verbundenen Rollen (11) und eine nach unten geknickte Gleitstückführung (14) aufweist, die am hinteren Ende mit der Achse (12) in Verbindung steht und die am vorderen freien Ende von einem an einem vorderen Träger (3) des Sitzgerippes mittig angeordneten Führungsarm (13) getragen wird, sodass der Verstellmechanismus für die Sitzschale (17) eine am Sitzgerippe (5) abgestützte Dreipunkt-Auflage bildet.

2. Verstellbarer Fahrzeugsitz nach Anspruch 1,
dadurch gekennzeichnet,
dass die Rollenführungen (10) im hinteren Sitzbereich angeordnet sind und mittels Flanschen (9) mit dem Sitzgerippe (5) in Verbindung stehen.

3. Verstellbarer Fahrzeugsitz nach Anspruch 1,
dadurch gekennzeichnet,
dass das eine Ende einer Gasfeder (21) an einem mittig an der Unterseite der Achse (12) angeordnetem Achsstück (23) und das andere Ende der Gasfeder (21) an einem vorderen Träger (3) des Sitzgerippes (5) angreift.

4. Verstellbarer Fahrzeugsitz nach Anspruch 1,
dadurch gekennzeichnet,
dass die Gleitstückführung (14) nach unten geknickt ist und am hinteren Ende mit der Mitte der Achse (12) in Verbindung steht und am vorderen freien Ende von einem am vorderen Träger (3) mittig angeordneten Führungsarm (13) getragen wird.

5. Verstellbarer Fahrzeugsitz nach Anspruch 4,
dadurch gekennzeichnet,
dass die Gleitstückführung (14) am vorderen freien Ende ein Hohlprofil (28) aufweist, das entlang am freien Ende des Führungsarms (13) gelenkig angeordneten Gleitstücken (15) gleitet.

6. Verstellbarer Fahrzeugsitz nach Anspruch 5,
dadurch gekennzeichnet,
dass das Hohlprofil (28) an der Unterseite in Längsrichtung ein Langloch (29) aufweist, durch das das freie Ende des Führungsarms (13) tritt.

7. Verstellbarer Fahrzeugsitz nach Anspruch 2,
dadurch gekennzeichnet,
dass die Rollenführung (10) zur spielfreien Lagerung der Rolle (11) in ihrer Ausgangsposition (Q) am oberen Ende konisch verjüngt ist und am oberen Ende einer nach vorne abfallenden Rollfläche (26) einen Rücksprung (27) aufweist.

8. Verstellbarer Fahrzeugsitz nach Anspruch 2,
dadurch gekennzeichnet,
dass die Rollenführung (10) zur Begrenzung des Verschiebeweges der Sitzschale (17) am unteren Ende eine nach vorne ansteigende Rollfläche (26) und einen Anschlag (22) aufweist.

## Claims

1. Adjustable vehicle seat for public conveyances, in particular for rail vehicles, consisting of a seat carcass, which is fast with the floor and carries an adjusting mechanism, and a seat pan with seat padding and back padding, wherein the slope of the seat pan is individually adaptable by means of the adjusting mechanism, characterised thereby, that the adjusting mechanism comprises two roller guides (10), which are arranged in the rear seat region and slope downwardly towards the front, with two rollers (11) connected by means of an axle (12) and a downwardly kinked slide member guide (14), which at the rear end stands in connection with with the axle (12) and which at the free front end is carried by a guide arm (13) arranged centrally at a forward carrier (3) of the seat carcass so that the adjusting mechanism forms a three-point support, which is supported at the seat carcass (5), for the seat pan (17).

2. Adjustable vehicle seat according to claim 1, characterised thereby, that the roller guides (10) are arranged in the rear seat region and stand in connection with the seat carcass (5) by means of flanges (9).

3. Adjustable vehicle seat according to claim 1, characterised thereby, that the one end of a gas spring (21) engages at an axle member (23) arranged centrally at the underside of the axle (12) and the other end of the gas spring (21) engages at a forward carrier (3) of the seat carcass (5).

4. Adjustable vehicle seat according to claim 1, characterised thereby, that the slide member guide (14) is kinked downwardly and at the rear end stands in connection with the centre of the axle (12) and at the free front end is carried by a guide arm (13) arranged centrally at the forward carrier (3).

5. Adjustable vehicle seat according to claim 4, characterised thereby, that the slide member guide (14) at the front free end has a hollow profile (28), which slides along slide members (15) articulatedly arranged at the free end of the guide arm (13).

6. Adjustable vehicle seat according to claim 5, characterised thereby, that the hollow profile (28) displays an elongate hole (29), through which the free end of the guide arm (13) passes, in longitudinal direction at the underside.

7. Adjustable vehicle seat according to claim 2, characterised thereby, that the roller guide (10) is narrowed conically at the upper end for the bearing free from play of the roller (11) in its initial position and displays a recess (27) at the upper end of a rolling surface (26) sloping downwardly towards the front.

8. Adjustable vehicle seat according to claim 2, characterised thereby, that the roller guide (10) at the lower end displays a rolling surface (26) sloping upwardly towards the front and an abutment (22) for limitation of the displacement travel of the seat pan (17).

## Revendications

1. Siège de véhicule réglable pour les transports en commun, en particulier pour des véhicules sur rails, formé d'une carcasse de siège solidaire du sol et portant un mécanisme de réglage, et d'une coque de siège pourvue d'un rembourrage de siège et de dossier, l'inclinaison de la coque de siège étant adaptable individuellement à l'aide du mécanisme de réglage,
caractérisé en ce que le mécanisme de réglage comprend deux guidages à rouleaux (10) inclinés vers l'avant, disposés dans la zone arrière du siège et pourvus de deux rouleaux (11) reliés par un axe (12), et un guidage à coulisseaux (14) infléchi vers le bas, dont l'extrémité arrière est reliée à l'axe (12) tandis que son extrémité libre avant est portée par un bras de guidage (13) disposé au milieu du support avant (3) de la carcasse du siège, de sorte que le mécanisme de réglage définit pour la coque de siège (17) un appui en trois points en appui contre la carcasse de siège (5).

2. Siège de véhicule réglable selon la revendication 1, caractérisé en ce que les guidages à rouleaux (10) sont disposés dans la zone arrière du siège et sont reliés à la carcasse de siège (5) à l'aide de brides (9).

3. Siège de véhicule réglable selon la revendication 1, caractérisé en ce qu'une extrémité d'un ressort à gaz (21) agit sur une pièce axiale (23) disposée au milieu de la face inférieure de l'axe (12), tandis que l'autre extrémité du ressort à gaz (21) agit sur un support avant (3) de la carcasse de siège (5).

4. Siège de véhicule réglable selon la revendication 1, caractérisé en ce que le guidage à coulisseaux (14) est infléchi vers le bas et est relié, au niveau de son extrémité arrière, au milieu de l'axe (12), en étant porté, au niveau de son extrémité libre avant, par un bras de guidage (13) disposé au milieu du support avant (3).

5. Siège de véhicule réglable selon la revendication 4, caractérisé en ce que le guidage à coulisseaux (14) comporte, à son extrémité libre avant, un profilé creux (28) qui coulisse le long de coulisseaux (15) articulés à l'extrémité libre du bras de guidage (13).

6. Siège de véhicule réglable selon la revendication 5, caractérisé en ce que le profilé creux (28) comporte, sur sa face inférieure, dans le sens longitudinal, un trou oblong (29) dans lequel pénètre l'extrémité libre du bras de guidage (13).

7. Siège de véhicule réglable selon la revendication 2, caractérisé en ce que le guidage à rouleaux (10), pour un montage sans jeu du rouleau (11) dans sa position initiale (Q), s'effile en cône au niveau de son extrémité supérieure et présente, au niveau de l'extrémité supérieure d'une surface de roulement (26) inclinée vers l'avant, un épaulement (27).

8. Siège de véhicule réglable selon la revendication 2, caractérisé en ce que, pour limiter la course de la coque de siège (17), le guidage à rouleaux (10) présente à son extrémité inférieure une surface de roulement (26) montant vers l'avant, et une butée (22).
